# EUROPÄISCHE PATENTANMELDUNG

(11) **EP 0 733 690 A2**
(43) Veröffentlichungstag der Anmeldung: **25.09.1996**
(21) Anmeldenummer: 96101021.2
(22) Anmeldetag: 25.01.1996
(51) Int. Cl.: C09J 163/00

(54) **Schmelzklebermasse**

(30) Priorität: 22.03.1995 DE 19510316
(71) Anmelder: HÜLS AKTIENGESELLSCHAFT, D-45764 Marl (DE)
(72) Erfinder: Simon, Ulrich, D-44623 Herne (DE); Hahn, Siegfried, D-53773 Hennef-Stossdorf (DE)

(57) **Zusammenfassung**

Schmelzklebermassen zum Beschichten von textilen Flächengebilden zeigen Probleme hinsichtlich der Wasch- und Reinigungsbeständigkeit. Durch den erfindungsgemäßen Einsatz eines Epoxides zur Schmelzklebermasse können reinigungsbeständige Verbundstoffe mit besonders hoher Waschbeständigkeit hergestellt werden.

## Beschreibung

Die Erfindung betrifft eine Schmelzklebermasse zum Beschichten von Flächengebilden, beispielsweise von Textilien, Leder, Schaumstoffen oder Kunststoffolien. Insbesondere betrifft die Erfindung eine Schmelzklebermasse zum rasterförmigen Beschichten von fixierbaren Einlagenstoffen für die Bekleidungsindustrie, speziell für Oberbekleidung.

Es sind Schmelzklebermassen bekannt, die vorzugsweise in Form einer wäßrigen Paste rasterförmig auf ein zu beschichtendes Flächengebilde aufgebracht werden. Anschließend wird getrocknet und gesintert. Das gesinterte Produkt stellt die Schmelzklebermasse dar. Die beschichteten Flächengebilde werden in Bahnform oder als Zuschnitte mit anderen bahnenförmigen oder zugeschnittenen Flächengebilden unter Einwirkung von Druck und vergleichsweise milder Temperatur zu reinigungsbeständigen Verbundstoffen mit besonders hoher Waschbeständigkeit und Haftung laminiert.

Es sind zahlreiche Schmelzklebermassen mit reinigungsbeständigen Eigenschaften für das Siebdruckverfahren bekannt. Diese sind hauptsächlich aus wäßrig-pastösen Mischungen aus Schmelzkleberfeinpulvern gebildet, welche auch in gröberer Kornform für sich alleine direkt zum Beschichten im Streu- oder Pulverpunktverfahren aufgetragen werden können. Die heute meistens eingesetzten reinigungsbeständigen Schmelzklebermassen basieren auf Copolyamiden, Copolyestern oder Niederdruck-Polyethylen. Andere, ebenfalls verwendete Schmelzklebermassen sind nicht reinigungsbeständig.

Zum Anteigen der Schmelzkleberfeinpulver zur Herstellung der Haftschicht werden spezielle Suspendier- bzw. Dispergiermittel benutzt, die den Anteigungen eine saubere Druckfähigkeit verleihen, ohne aber die Reinigungsbeständigkeit zu reduzieren. Daneben sollen Dispergiermittel noch besondere Eigenschaftsmerkmale hervorrufen, beispielsweise die Verhinderung einer Sedimentation der eingemischten Pulver, eine konturenscharfe Ausbildung des Druckes, eine gesteuerte Penetration der Schmelzkleberpaste, eine Verhinderung des Durchschlages durch den Oberstoff, die Vermeidung eines Rückschlages beim Fixieren oder die Ausschaltung der Kantenverschweißung beim Zuschneiden der Flächengebilde. Derartige Dispergiermittel sind beispielsweise in den Patentschriften DE-B 20 07 971, DE-B 22 29 308, DE-B-24 07 505, DE-B 25 07 504 und DE-B-35 10 109 beschrieben worden. Den Dispergiermitteln können Weichmacher beigefügt sein. Häufig werden noch Additive aus hochmolekularem Polyethylenoxid zugefügt, wodurch die Lauffähigkeit der Paste erhöht wird.

Zum rasterförmigen Beschichten im Siebdruckverfahren werden Siebdruckschablonen benutzt, die in regelmäßiger oder unregelmäßiger Anordnung Perforationen besitzen, durch die Schmelzklebermassen mit einer Innenrakel auf den Einlagenstoff aufgedruckt werden. Während früher Siebschablonen mit vergleichsweise weitem Abstand und großen Öffnungen, z. B. 17 Mesh, benutzt wurden, werden in jüngerer Zeit immer mehr feinere Beschichtungen mit enger Aneinanderreihung kleinerer Öffnungen, z. B. 30 Mesh, unter Ausbildung eng nebeneinanderliegender kleiner Schmelzkleberpunkte durchgeführt. Außerdem sind die Einlagestoffe leichter, feiner und offener geworden. Mit der Verfeinerung der Raster ist die Beschichtungsproblematik gewachsen, und gleichzeitig haben die Reinigungs- und Waschprobleme zugenommen, da die größere Rasteranordnung mit größeren Einzelpunkten eine höhere Haftfestigkeit erzeugte als die feinere Rasteranordnung mit kleineren Einzelpunkten.

Aber auch die Verwendung von Einlagenstoffen hat eine graduelle Änderung erfahren. Aus modischen und wohl auch aus Umweltschutzgründen werden immer mehr Einlagenstoffe in Kleidungsstücken verwendet, die eher gewaschen als gereinigt werden, so beispielsweise Einlagen für Freizeitbekleidung.

Dieser Trendwandel hat dazu geführt, daß die ursprünglich für Oberbekleidungsstücke ausschließlich verwendeten Copolyamid-Schmelzkleber mehr und mehr durch Copolyester ersetzt worden sind, da Copolyester zwar nicht die besonders gute chemische Reinigungsfestigkeit der Copolyamide aufweisen, aber eine bessere Waschbeständigkeit besitzen. Niederdruck-Polyethylene scheiden wegen der zu hohen Fixiertemperaturen aus.

Kosten und Qualitätsgründe haben dazu geführt, daß die Beschichtungsmenge, die pro m² Einlagenstoff aufgebracht wird, deutlich reduziert wurde.

Während frühere Auftragsmengen von 18 bis 25 g/m² üblich waren, liegen diese heute bei 7 bis 15 g/m², das kam dem Bedürfnis nach einem weichen, fließendem Fall der fixierten Kleidungsstücke nach.

Um die Probleme hinsichtlich der reduzierten Wasch- und Reinigungsbeständigkeit sowie hinsichtlich der schwächeren Haftung zu lösen, sind verbesserte Schmelzklebermassen, aber auch verbesserte Beschichtungstechnologien entwickelt worden. Duo- oder Doppelpunktbeschichtungen sind z. B. in den Patenten DE-B 22 14 236, DE-B 22 31 723, DE-B 25 36 911 und DE-B 32 30 579 beschrieben. Außerdem ist in den Patentschriften EP-A 0 219 376 und EP-A 0 365 711 eine Indirekt-Beschichtungsmethode beschrieben.

Die Beschichtungsträger wurden dadurch verbessert, daß feinere Garne mit feintitrigeren Einzelfasern bis hin zum Microfaserbereich sowie Synthetikgarne, beispielsweise Hochbauschacrylgarne und gekräuselte Polyestergarne verwendet wurden. Außerdem sind die ursprünglich verwendeten Gewebe durch andere Flächengebilde abgelöst worden, z. B. durch Webwirkwaren oder durch Webwirk- und Wirkvliese, wobei diese zuletzt genannten Stoffe eine Kombination aus Vliesen mit Wirkwaren darstellen.

Als weiterhin bestehender Mangel wird insbesondere eine Versteifung sowie eine erhöhte Knitteranfälligkeit eines Fixierverbundes aus Einlage und Oberstoff, insbesondere bei Feinrasterbeschichtungen, angesehen. Ganz besonders wird aber als negativ angesehen, daß bei feinbeschichteten Einlagenstoffen auf feinen Oberstoffen, beispielsweise Blusenoberstoffen, die Waschbeständigkeit des Fixierverbundes trotz der Verwendung von Polyestern nur mäßig und vielfach sogar mangelhaft ist. Es besteht also weiterhin ein erhebliches Bedürfnis nach einer unter milden, heute üblichen Fixiertemperaturen aufbügelbaren Einlage mit geringerem Beschichtungsgewicht, die einen weichen Fixiergriff vermittelt, einwandfrei waschbar ist und nach dem Waschprozeß eine hohe Haftfestigkeit beibehält.

Ein großer Bedarf für solche Einlagen besteht in der Damenoberbekleidungskonfektion. Besonders hier werden modeabhängig sehr fixierunfreundliche Oberstoffe wie Seide, Polyester-Viskose-Georgette und silikonisierte oder fluorcarbonisierte Oberstoffe verarbeitet. Mit den gängigen Einlagen werden recht gute Primärhaftungen erzielt, nach Wäschen oder Reinigung kommt es aber zu vollständigen Ablösungen.

Selbst aufwendige Beschichtungsmethoden wie das tradionelle Doppelpunkt- und Indirekt-Beschichtungsverfahren bringen hier kaum Erfolg.

Der Erfindung liegt daher die Aufgabe zugrunde, eine Schmelzklebermasse zu finden, die bei verminderter Beschichtungsmenge eine hohe Haftfestigkeit sowie eine hervorragende Wasch- und Reinigungsbeständigkeit aufweist. Die Haftmasse soll auf Vliesen, Charmeusen und Webwirk-Wirkwaren appliziert werden, vornehmlich auf Einlagen mit Gewichten von 15 bis 40 g/m², bevorzugt Einlagen, die mit Silikonen oder Silikonweichmachern vorbehandelt sind. Die Schmelzklebermasse soll dabei für die verschiedenen Beschichtungsmethoden anwendbar sein. Zu den Beschichtungsmethoden zählen dabei u. a. die Pastenpunkt-, Schmelz- und Pulverpunktbeschichtung und flächige Beschichtungen z. B. Folien und Spinnvliese.

Es wurde nun überraschend gefunden, daß eine Schmelzklebermasse auf Basis eines thermoplastischen Schmelzklebers und eines Epoxids diese Forderung erfüllt.

Die Schmelzklebermasse kann dabei aus einem Copolyester, einem Copolyamid oder aus beiden Komponenten bestehen. Als Epoxid eignen sich besonders die Epoxide auf Basis Bisphenol-A-Epoxid.

Bei der Pastenpunktbeschichtung wird die Schmelzklebermasse erfindungsgemäß, vorzugsweise in wäßriger-pastöser Form, über eine Rotationssiebdruckschablone auf den zu beschichtenden Gegenstand z. B. ein 15 g/m² Einlagevlies, mit 30 Mesh (30 Punkte pro inch) für ein Bekleidungsstück aufgebracht. Die Schmelzkleberpulver Copolyester/Epoxid oder Copolyamid/Epoxid können als fertige Mischung oder einzeln in die Paste eingerührt werden.

Nach einem üblichen Trocknungs- und Sinterprozeß werden die rasterförmig beschichteten Flächengebilde unter Druck- und Temperatureinwirkung mit anderen Flächengebilden zu einem Verbund fixiert, wobei dieser eine hohe Wasch- und Reinigungsfestigkeit aufweist. Gegenüber einer gleichartigen Rasterbeschichtung ohne Epoxidanteil kann bei gleicher oder geringerer Auftragsmenge nach einer Wäsche eine um 10 mal höhere Haftung auf den oben beschriebenen schwer zu fixierenden Oberstoffen erreicht werden, deshalb kann die notwendige Beschichtungsmenge reduziert werden, um einen weichen, weniger knitteranfälligen und weniger steifen Griff und Fall des Verbundes zu erreichen. Die getrocknete und gesinterte Schmelzklebermasse kann im Bereich von 6 bis 13 g/m², besonders 6 bis 10 g/m² liegen gegenüber 8 bis 12 g/m² bei konventionellen Beschichtungen.

Die in der Schmelzkleberpaste einsetzbaren Bisphenol-A-Epoxide stellen Pulver mit einer Korngröße von max. 80 µm dar und haben Schmelzpunkte (Kofler) von 65 bis 110 °C und Epoxidäquivalente von 450 bis 6 000 g/equiv, vorzugsweise von 2 400 bis 4 000 g/equiv.

Die Schmelzklebermasse bestehend aus einer Mischung von Copolyester und Bisphenol-A-Epoxid oder Copolyamid und Bisphenol-A-Epoxid läßt sich auch erfindungsgemäß über eine Tiefdruckauftragsmaschine (Pulverpunkt) oder im Schmelzauftrag (Meltprint-Verfahren) rasterförmig auftragen. Beim Tiefdruckverfahren wird das Pulver über einen Pulvertrichter in eine leicht temperierte Gravurwalze (25 bis 50 °C) auf eine Einlage, die über Heizwalzen (200 bis 260 °C) auf eine Oberflächentemperatur von ca. 170 °C gebracht wurde, transferiert und in einem IR-Kanal angesintert. Es werden Auftragsgewichte von 10 bis 15 g/m² angestrebt.

Bei der Pastenpunkt- und Pulverpunktbeschichtung wird zum Beschichten von Flächengebilden, insbesondere von Einlagenstoffen, eine Schmelzklebermasse eingesetzt auf Basis eines thermoplastischen Schmelzklebers und eines Epoxids. Als thermoplastischer Schmelzkleber können Copolyester, Copolyamide oder beide Komponenten eingesetzt werden, wie sie üblicherweise für die Herstellung textiler Einlagen eingesetzt werden.

Als Epoxid eignet sich vorzugsweise Bisphenol-A-Epoxid. Das Epoxid hat vorzugsweise eine Korngröße von weniger als 80 µm, einen Schmelzpunkt im Bereich von 65 bis 110 °C und ein Epoxidäquivalent zwischen 450 bis 6 000 g/equiv. Werden neben dem Epoxid Copolyester und Copolyamide zusammen eingesetzt, so liegen die Gewichtsverhältnisse für Copolyester, Copolyamid und Epoxid im Bereich von 50 bis 90 % (Copolyester), 5 bis 25 % (Copolyamid) und 5 bis 25 % Epoxid, vorzugsweise wird das Epoxid in Mengen von 10 bis 15 Gew.-% eingesetzt. Wird neben dem Epoxid nur ein Copolyester verwendet, so liegen die Gewichtsverhältnisse von Copolyester zu Epoxid zwischen 95 : 5 bis 75 : 25. Beim Einsatz von Copolyamid und Epoxid liegen die Gewichtsverhältnisse von Copolyamid zu Epoxid zwischen 95 : 5 bis 75 : 25. Das Bisphenol-A-Epoxid kann als konfektionierte Copolyester-Epoxid oder Copolyamid-Epoxid-Mischung oder allein der Paste zugeführt werden.

Die Schmelzkleberpaste kann auch Weichmacher enthalten. Bevorzugt sind feste Weichmacher wie PTSA, O-PTSA oder Dicyclohexylphthalat in einer Korngröße zwischen 1 und 80 µm. Die Schmelzklebermasse kann einen Weichmacheranteil von 8 bis 20 Gew.-%, bezogen auf die Schmelzkleberpulver, enthalten. Eingesetzt wird die Schmelzklebermasse vorzugsweise als wäßrig-pastöse Mischung aus thermoplastischem Schmelzkleber, Epoxid und festen Weichmachern. Der Trockengehalt der Schmelzklebermasse liegt zwischen 30 und 50 Gew.-%.

Die in der Pulvermischung enthaltenen Copolyamide oder Copolyester sind handelsübliche Produkte z. B. VESTAMELT X 7352, VESTAMELT 730, VESTAMELT 4481 der Hüls AG. Entscheidend für die erfindungsgemäße Anwendung ist der Anteil an Bisphenol-A-Epoxid.

Die Schmelzkleberpaste für die Beschichtung wird folgendermaßen hergestellt. Folgende Bestandteile werden in angegebener Weise vermischt.

### Grundpaste:

| | | |
|---|---|---|
| Wasser | 1 800 | |
| Mirox HP | 40 | Polyacrylsäurederivat-Dispersion |
| Intrasol 12/18/5 | 60 | Fettalkoholethoxilat |
| Tegopren 5847 | 10 | Polysiloxanethoxilat |
| Unimoll 66 M | 80 | Dicyclohexylphthalat |
| PTSA | 30 | Paratoluolsulfonamid |
| Epoxid | 70 | |
| Copolyester | 450 | |
| Copolyamid | 150 | |
| Mirox OX | 100 | |

### Beispiel 1

Zur Herstellung einer ersten Paste wird folgender Copolyester (I) und folgendes Copolyamid (II) verwendet:

### Copolyester (I) VESTAMELT 4481

| | |
|---|---|
| Korngröße: | 0 bis 80 µm |
| Schmelzindex (180 °C, 21,6 N): | 12 g/10 min |
| Schmelzpunkt Ring + Kugel: | 125 °C |
| Schmelzpunkt (DSC): | 108 °C |
| Hersteller: Hüls AG | |

### Copolyamid (II) VESTAMELT 730-P1

| | |
|---|---|
| Korngröße: | 0 bis 80 µm |
| Schmelzindex (180 °C, 21,6 N): | 90 g/10 min |
| Schmelzpunkt (Mettler): | 108 °C |
| Schmelzpunkt (DSC): | 98 °C |
| η-rel: | 1,3 |
| Hersteller: Hüls AG | |

Als erfindungsgemäßes Bisphenol-A-Epoxid wird ein Produkt mit folgenden Eigenschaften eingesetzt:

| | |
|---|---|
| Korngröße: | 0 bis 80 µm |
| Schmelzbereich: | 100 bis 110 °C (nach Kofler) |
| Epoxidäquivalent: | 2 400 bis 4 000 g/equiv. |

Nach Einrühren der 3 Pulver (Epoxid, Copolyester und Copolyamid) in die wäßrige Dispersion erhält man eine druckfähige Schmelzkleberpaste, die über eine 30 Mesh Rotationsschablone auf ein 16 g/m² Nonwoven aus einer Polyamid-Polyestermischung, das nachträglich silikonisiert wurde, aufgetragen und getrocknet. Das Auftragsgewicht trocken sollte zwischen 10 und 11 g/m² liegen.

### Beispiel 2

In dieser Paste wurde statt einer Copolyamid-Copolyester-Mischung nur mit einem Copolyamid (VESTAMELT 730-P1) und dem erfindungsgemäßen Epoxid gearbeitet.

### Vergleichsbeispiel 1

Grundlage für diese Paste ist das Beispiel 1 ohne Epoxidzugabe.

### Rezeptur:

| | |
|---|---|
| Wasser | 1 800 g |
| Mirox HP | 40 g |
| Intrasol 12/18/5 | 60 g |
| Tegopren 5847 | 10 g |
| Unimoll 66 M | 80 g |
| PTSA | 30 g |
| VESTAMELT X 4481 | 450 g |
| VESTAMELT 730-P1 | 150 g |
| Mirox OX | 100 g |

Die Vergleichseinlage wurde entsprechend den Beispielen 1 und 2 verarbeitet. Auftragsgewicht ca. 10 g/m².

Alle drei Einlagen wurden gegen zwei verschiedene Oberstoffe
I. Seide
II. Polyester-Georgette
auf einer Durchlaufpresse fixiert.

| | |
|---|---|
| Preßdruck | 3,5 N/cm² |
| Preßzeit | 10 s |
| Preßtemperatur | 125 °C (Fugentemperatur) |

| **Probe aus** | **Oberstoff** | **nach Fixieren** | **nach Wäsche 1 x 40 °C** |
|---|---|---|---|
| Beispiel 1 | Seide | reißt | reißt |
| Beispiel 1 | Georgette | 3,81 N/5 cm | 4,75 N/5 cm |
| Beispiel 2 | Seide | 4,4 N/5 cm | 0,97 |
| Beispiel 2 | Georgette | 2,8 N/5 cm | 0,68 |
| Vergleichsbeispiel 1 | Seide | 2,3 N/5 cm | 0 (abgefallen) |
| Vergleichsbeispiel 1 | Georgette | 2,0 N/5 cm | 0 (abgefallen) |

Die Tabelle zeigt, daß die erfindungsgemäße Anwendung, Beispiele 1 und 2, sowohl in der Primärhaftung als auch nach einer 40 °C Wäsche, der traditionellen Anwendung (Vergleichsbeispiel ohne Epoxid) weit überlegen ist.

### Beispiel 3 zur Pulverpunktbeschichtung

Ein handelsüblicher Copolyester (VESTAMELT 4580-P816) der Hüls AG wird mit 10 % des unter Beispiel 1 und 2 beschriebenen Bisphenol-A-Epoxids im dryblend gemischt und mit einer Pulverpunktanlage auf eine Rascheleinlage von 75 g/m² appliziert. Es wurde eine Gravurwalze mit 28 Mesh eingesetzt. Es wurden Auftragsgewichte von 13 bis 15 g/m² erhalten. Anschließend wurde diese Einlage mit einer Durchlaufpresse gegen einen Polyester-Baumwoll-Oberstoff mit folgenden Fixierparametern verklebt:

| | |
|---|---|
| Fixiertemperatur | 135 °C (Fugentemperatur) |
| Fixierzeit | 10 s |
| Fixierdruck | 3,5 N |

### Vergleichsbeispiel 2

Als Stand der Technik wurde ebenfalls der Copolyester VESTAMELT 4580-P816, jedoch ohne Epoxidanteil in obengenannter Art und Weise beschichtet und fixiert.

### VESTAMELT 4580 (Copolyester)

| | |
|---|---|
| Korngröße: | 80 bis 160 µm |
| Schmelzindex: | 27 g/10 min (160 °C/2,16 N) |
| Schmelzpunkt: | 131 °C (Mettler) |
| Fp DSC: | 116 °C |
| Viskositätszahl: | 85 cm³/g |

### Auswertung

| **Probe aus** | **Oberstoff** | **Haftung in N/5 m** | | | **Auftrag** |
|---|---|---|---|---|---|
| | | **nach Fixieren** | **3 x 60 °C Wäsche** | **5 x CR** | |
| Stand d. Technik (Vergleichsbeispiel 2) | PES/BW | 8,0 | 4,0 | 5,5 | 18 g/m² |
| Beispiel 3 | PES/BW | 9,0 | 7,0 | 7,5 | 14 g/m² |

Die Auswertung zeigt, daß trotz niedrigerem Auftragsgewicht die erfindungsgemäßen Einlagen mit Epoxid deutlich bessere Beständigkeiten nach 3 x 60 °C Wäsche und 5 x chemischer Reinigung erhalten werden.

## Patentansprüche

1. Schmelzklebermasse zum Beschichten von Flächengebilden, insbesondere von Einlagenstoffen,
dadurch gekennzeichnet,
daß die Schmelzklebermasse eine Mischung aus thermoplastischem Schmelzkleber und Epoxid enthält, wobei der Epoxid-Anteil 5 bis 25 Gew.-% beträgt.

2. Schmelzklebermasse zum Beschichten von Flächengebilden, insbesondere von Einlagenstoffen,
dadurch gekennzeichnet,
daß die Schmelzklebermasse eine Mischung aus thermoplastischem Schmelzkleber und Epoxid enthält, wobei der Epoxid-Anteil 10 bis 15 Gew.-% beträgt.

3. Schmelzklebermasse nach Anspruch 1,
dadurch gekennzeichnet,
daß die Schmelzklebermasse eine Mischung aus Copolyester und Epoxid enthält.

4. Schmelzklebermasse nach Anspruch 1,
dadurch gekennzeichnet,
daß die Schmelzklebermasse eine Mischung aus Copolyamid und Epoxid enthält.

5. Schmelzklebermasse nach Anspruch 1,
dadurch gekennzeichnet,
daß die Schmelzklebermasse eine Mischung aus Copolyester, Copolyamid und Epoxid enthält.

6. Schmelzklebermasse nach Anspruch 5,
dadurch gekennzeichnet,
daß die Gewichtsverhältnisse von Copolyester, Copolyamid und Epoxid im Bereich von
50 bis 90 % Copolyester
5 bis 25 % Copolyamid
5 bis 25 % Epoxid
liegen, wobei die Gesamtmenge der Komponenten 100 % beträgt.

7. Schmelzklebermasse nach Anspruch 3,
dadurch gekennzeichnet,
daß das Gewichtsverhältnis von Copolyester zu Epoxid im Verhältnis 95 : 5 bis 75 : 25 steht.

8. Schmelzklebermasse nach Anspruch 4,
dadurch gekennzeichnet,
daß das Gewichtsverhältnis von Copolyamid zu Epoxid im Verhältnis 95 : 5 bis 75 : 25 steht.

9. Schmelzklebermasse nach den Ansprüchen 1 bis 8,
dadurch gekennzeichnet,
daß die Schmelzklebermasse feste Weichmacher wie PTSA, O-PTSA oder Dicyclohexylphthalat in einer Korngröße zwischen 1 und 80 µm enthält.

10. Schmelzkleber nach den Ansprüchen 1 bis 9,
dadurch gekennzeichnet,
daß die Schmelzklebermasse eine wäßrig-pastöse Mischung aus thermoplastischem Schmelzkleber, Epoxid und festen Weichmachern ist und der Trockenanteil der Schmelzklebermasse 30 bis 50 Gew.-% beträgt.

11. Schmelzklebermasse nach den Ansprüchen 1 bis 10,
dadurch gekennzeichnet,
daß die Beschichtungsmenge der Schmelzklebermasse nach dem Trocknen und Sintern bei 6 bis 13 g/m² Flächengebilde liegt.

12. Schmelzklebermasse nach den Ansprüchen 1 bis 11,
dadurch gekennzeichnet,
daß das Epoxid ein Epoxid auf Basis von Bisphenol-A ist und eine Korngröße von weniger als 80 µm, einen Schmelzpunkt im Bereich von 65 bis 110 °C und ein Epoxidäquivalent zwischen 450 bis 6 000 g/equiv. aufweist.

13. Schmelzklebermasse nach den Ansprüchen 1 bis 12,
dadurch gekennzeichnet,
daß das Epoxid ein Epoxid auf Basis von Bisphenol-A ist und eine Korngröße von weniger als 80 µm, einen Schmelzpunkt im Bereich von 95 bis 110 °C und ein Epoxidäquivalent zwischen 2 400 bis 4 000 g/equiv. aufweist.

14. Schmelzklebermasse nach den Ansprüchen 1 bis 13,
dadurch gekennzeichnet,
daß die Schmelzklebermasse mittels Rotationssiebdruck aufgetragen wird.

15. Schmelzklebermasse nach den Ansprüchen 1 bis 9 und 11 bis 13,
dadurch gekennzeichnet,
daß die Schmelzklebermasse mittels Tiefdruckverfahren (Pulverpunkt) oder im Schmelzauftrag (Meltprint-Verfahren) aufgetragen wird.

16. Schmelzklebermasse nach den Ansprüchen 1 bis 15,
dadurch gekennzeichnet,
daß der Weichmachergehalt bei 8 bis 20 Gew.-%, bezogen auf die Schmelzkleberpulver, liegt.

17. Schmelzklebermasse nach den Ansprüchen 1 bis 14,
dadurch gekennzeichnet,
daß das Bisphenol-A-Epoxid als konfektionierte Copolyester-Epoxid- oder Copolyamid-Epoxid-Mischung der Paste zugeführt wird oder das Epoxid allein der Paste zugeführt wird.

18. Verwendung der Schmelzklebermasse nach den Ansprüchen 1 bis 17 zur rasterförmigen Beschichtung von Flächengebilden, insbesondere Einlagestoffen für Oberbekleidung.

19. Einlagestoff für die Bekleidung,
dadurch gekennzeichnet,
daß er mit einer Schmelzklebermasse nach einem der Ansprüche 1 bis 18 versehen ist.
